# EUROPÄISCHE PATENTSCHRIFT

(11) **EP 1 807 286 B1**
(45) Veröffentlichungstag und Bekanntmachung des Hinweises auf die Patenterteilung: **19.08.2009**
(21) Anmeldenummer: 05777591.8
(22) Anmeldetag: 30.08.2005
(51) Int. Cl.: B60R 1/12

(54) **RÜCKSPIEGEL FÜR EIN KRAFTFAHRZEUG**
REAR-VIEW MIRROR FOR A MOTOR VEHICLE
RETROVISEUR POUR VEHICULE AUTOMOBILE

(30) Priorität: 26.10.2004 US 622249 P
(43) Veröffentlichungstag der Anmeldung: 18.07.2007
(73) Patentinhaber: VOLKSWAGEN AG, 38436 Wolfsburg (DE)
(72) Erfinder: DUPONT, Cedric, San Francisco, CA 94110 (US); ROSARIO, Daniel, Santa Cruz, CA 95060 (US); STOSCHEK, Arne, Palo Alto, CA 94303 (US); SPECKS, Will, 38440 Wolfsburg (DE); CHEN, Pao, Hsu, Milpitas, CA 95035 (US)
(86) Internationale Anmeldenummer: PCT/EP2005/009333
(87) Internationale Veröffentlichungsnummer: WO 2006/045368

(56) Entgegenhaltungen:
- DE-A1- 10 233 734
- FR-A- 2 724 888
- US-A- 6 106 121
- US-A1- 2002 060 864
- US-A1- 2004 202 001

## Beschreibung

Die Erfindung betrifft einen Rückspiegel für ein Kraftfahrzeug, wobei der Rückspiegel eine Reflektorschicht zum Reflektieren von Licht, das von einer Betrachtungsrichtung aus auf den Rückspiegel trifft, und eine in Bezug auf die Betrachtungsrichtung hinter der Reflektorschicht angeordnete Displayschicht zum Emittieren von Licht umfasst. US 2004/02 02 001 A1 offenbart einen solchen Rückspiegel. Dieser Rückspiegel weist einen Zirkularpolarisator zur Unterdrückung unerwünschter Reflexion auf. Dieser Rückspiegel erfüllt insbesondere eine Doppelfunktion. Zum einen ist er als Rückspiegel im herkömmlichen Sinne und zum anderen als Display verwendbar, wenn die Displayschicht Licht emittiert.

Die US 6 106 121 offenbart einen Rückspiegel für ein Fahrzeug, wobei der Rückspiegel ein LCD-Display und zwei polarisierende Schichten umfasst, die in einem energielosen Zustand transparent sind.

Ein Spiegel mit einem Display wird als MirrorTV von Philips angeboten. Einzelheiten können z.B. den unter den Internetadressen
www.ces2004.philips.com/downloads/press-releases/business-productivity/MirrorTV.pdf und
www.pcworld.com/resource/printable/article/0,aid,111100,00.asp
abgelegten Webseiten entnommen werden.

Die EP 0 719 675 B1 offenbart einen Innenspiegel eines Fahrzeugs mit einer Anzeigevorrichtung, wobei die Anzeigevorrichtung einen Spiegelkörper, einen in einer Vorderöffnung des Spiegelkörpers vorgesehenen Rückspiegel zum Reflektieren eines Bildes hinter einem Fahrzeug zurück zu einem Blickpunkt eines Fahrers und einen in dem Spiegelkörper vorgesehenen Informationsanzeigespiegel zum Reflektieren der durch eine Lichtemissionsanzeigeeinrichtung angezeigten visuellen Informationen zurück zu dem Blickpunkt des Fahrers durch den Informationsanzeigebereich umfasst, wobei der Rückspiegel einen an der gesamten Hinterfläche eines Glassubstrats angebrachten halbdurchlässigen Reflexionsfilm und einen an der Hinterfläche des halbdurchlässigen Reflexionsfilms aufgebrachten schwarz beschichteten Film aufweist, wobei ein Teil des schwarz beschichteten Films zur Bildung der Informationsanzeige entfernt ist, und wobei an der Lichtemissionsanzeigeeinrichtung angebrachte Schlitze zum Leiten der durch die Lichtemissionsanzeigeeinrichtung angezeigten Informationen in die Richtung des Informationsanzeigespiegels vorgesehen sind.

Die EP 0 635 395 B1 offenbart eine Informationseinrichtung in einem Kraftfahrzeug, die eine an ein Bordnetz des Kraftfahrzeugs anschließbare elektronische Schaltung sowie einen oder mehrere Sensoren, eine Anzeigevorrichtung und gegebenenfalls Bedienungselemente umfasst, wobei der Sensor und die Schaltung im Gehäuse eines Kraftfahrzeuginnenspiegels untergebracht sind, wobei die Schaltung mit einem durch einen hohlen Tragarm des Innenspiegels geführtes und an das Bordnetz anschließbares Kabel verbunden ist, und wobei in das Spiegelglas des Innenspiegels die Anzeigevorrichtung integriert ist.

Die DE 197 41 896 C2 offenbart eine Vorrichtung zur bildlichen Darstellung von Bereichen der Umgebung eines Kraftfahrzeugs in einem sich im Innenraum des Kraftfahrzeugs befindlichen Sichtbereich eines Fahrers, wobei die Vorrichtung zumindest einen Bildschirm umfasst, auf dem sensorisch erfasste und elektronisch bearbeitete Bildinformationen dargestellt werden, wobei zumindest eine Kamera mit einem Sensor zur Erfassung der Bildinformationen und von Informationen über die Raumlage von Bestandteilen der Umgebung des Kraftfahrzeugs vorgesehen ist, wobei zur elektronischen Bearbeitung der sensorisch erfassten Bildinformationen eine Steuereinheit vorgesehen ist, der Steuereinheit Betriebskennwerte des Kraftfahrzeugs als eingangsgrößen zugeleitet werden, und wobei die Steuereinheit in Abhängigkeit von den Betriebskennwerten zwischen unterschiedlichen Arten der bildlichen Darstellung umschaltet.

Weitere Spiegel sind aus der US 6 646 697, der US 5 864 432, der US 6 700 692, der US 6 648 477, der US 6 646 806, der US 2003/0222982, der US 2004/0032675, der US 2004/0114384, der US 2004/0032676, der US 2003/0095047, der US 2003/0043480, der US 2002/0070872, der US 2001/0055143 und der US 2001/0013825 bekannt.

Es ist Aufgabe der Erfindung, einen eingangs genannten Rückspiegel zu verbessern. Es ist insbesondere Aufgabe der Erfindung, einen Rückspiegel mit einer Spiegelfunktion und mit einer Anzeigefunktion zu verbessern.

Vorgenannte Aufgabe wird durch einen Rückspiegel für ein Kraftfahrzeug gelöst, wobei der Rückspiegel eine Reflektorschicht zum Reflektieren von Licht, das von einer Betrachtungsrichtung aus auf den Rückspiegel trifft, eine in Bezug auf die Betrachtungsrichtung hinter der Reflektorschicht angeordnete (insbesondere ein- und ausschaltbare) Displayschicht zum Emittieren von Licht, eine zwischen der Displayschicht und der Reflektorschicht angeordnete Quarter Waveplate und eine zwischen der Displayschicht und der Quarter Waveplate angeordnete reflektierende Linear-Polarisationsschicht umfasst.

Eine Quarter Waveplate kann auch als λ/4-Platte bezeichnet werden. Eine Quarter Waveplate wird z. B. als Teil eines Zirkular-Polarisators verwendet. Die erfindungsgemäß verwendete Quarter Waveplate ist dabei insbesondere nicht - wie in der US 6106 121 vorgesehen - eine deaktivierbare Schicht. Geeignete Quarter Waveplates können von der Polatechno Co., Ltd., Japan, www.polatechno.co.jp bezogen werden. Einzelheiten zu einer Quarter Waveplate und Zirkular-Polarisatoren können der unter der Adresse www.fas.harvard.edu/∼scdiroff/Ids/LightOptics/CircularPolarization/CircularPolaization.html abgelegten Internetseite entnommen werden. Eine Quarter Waveplate im Sinne der Erfindung ist insbesondere eine Schicht zur Drehung der Polarisation von durch die Quarter Waveplate durchtretendem Licht um im wesentlichen 45°.

Eine reflektierende Linear-Polarisationsschicht im Sinne der Erfindung ist insbesondere eine Schicht, die für von der Disptayschicht emittiertes im wesentlichen in einer Durchgangsrichtung polarisiertes Licht im wesentlichen transparent ist und die von der Displayschicht emittiertes im wesentlichen orthogonal zur Durchgangsrichtung polarisiertes Licht im wesentlichen reflektiert. Die reflektierende Linear-Polarisationsschicht kann z.B. als eine so genannte DBEF-Filter-Schicht ausgebildet sein. Einzelheiten zu einer DBEF-Filter-Schicht können z.B. der US 6 747 618, der US 6 753 999, der US 6 481 851 und der US 6 407 408 entnommen werden. Weitere Einzelheiten zu einer DBEF-Filter-Schicht können z.B. der unter der Internetseite

Products3.3m.com/catalog/uslen001/electronics_mfg/vikuiti/node_L9VF6WSX2Jbe/root_GST1T 4S9TCgv/vroot_S6Q2FD9X0Jge/gvel_4Q2VBPLNL5gl/theme_us_vikuiti_3_0/command_AbcPa geHander/output_print abgelegten Internetseite und den darin zitierten Pateritschriften entnommen werden.

Die Reflektorschicht ist insbesondere in dem Sinne semitransparent, dass sie für von der Displayschicht emittiertes Licht transparent ist, jedoch von einer Betrachtungsrichtung aus auf den Rückspiegel treffendes Licht reflektiert.

In einer Ausgestaltung der Erfindung umfasst die Displayschicht eine der Betrachtungsrichtung zugewandte reflektierende Oberfläche.

In einer weiteren Ausgestaltung der Erfindung umfasst der Rückspiegel weiterhin eine in Bezug auf die Betrachtungsrichtung vor der Quarter Waveplate angeordnete Anti-Reflektionsschicht. Geeignete Anti-Reflektionsschichten werden von Integrated Optical Services Corp., 291 Sinclair Frontage Rd., Milpitas, CA 95035, USA und Southwall Technologies Corp., 3975 East Bayshore Rd., Palo Alto, CA 94303, USA angeboten.

In einer weiteren Ausgestaltung der Erfindung ist die Anti-Reflektionsschicht mit der Quarter Waveplate verbunden.

Für die Implementierung der Displayschicht kommen z.B. LCDs in Frage. In einer weiteren, besonders geeigneten Ausgestaltung der Erfindung umfasst die Displayschicht eine OLED-Schicht (Polymere oder insbesondere Small Molecule), insbesondere mit einer der Betrachtungsrichtung zugewandten reflektierenden Oberfläche.

In einer weiteren Ausgestaltung der Erfindung besitzt die Reflektorschicht für entgegen der Betrachtungsrichtung auf die Reflektorschicht treffendes Licht eine Transparenz von mehr als 99%, insbesondere eine Transparenz von mehr als 99,5%.

In einer weiteren Ausgestaltung der Erfindung umfasst die Reflektorschicht eine oder mehrere Verbindungen aus der Gruppe der Verbindungen TiO₂, SiO₂ und HfO₂, insbesondere eine Mischung aus allen diesen Verbindungen.

In einer weiteren Ausgestaltung der Erfindung treten zumindest 40%, insbesondere zumindest 45%, des mittels der Displayschicht entgegen der Betrachtungsrichtung emittierbaren Lichts entgegen der Betrachtungsrichtung aus dem Rückspiegel aus. In einer weiteren Ausgestaltung der Erfindung ist bei Licht emittierender Displayschicht für entgegen der Betrachtungsrichtung aus dem Rückspiegel austretendes Licht eine Helligkeit von mehr als 350 cd/m², insbesondere von mehr als 400 cd/m², erreichbar. D.h. es tritt in einem Bereich des Rückspiegels, in dem die Displayschicht ihre volle Lichtleistung bereitstellt, Licht mit einer Helligkeit von mehr als 350 cd/m², insbesondere von mehr als 400 cd/m², aus. Es kann auch bei Licht emittierender Displayschicht für entgegen der Betrachtungsrichtung aus dem Rückspiegel austretendes Licht eine Helligkeit von mehr als 500 cd/m² erreichbar sein.

In einer weiteren Ausgestaltung der Erfindung ist in Bezug auf die Betrachtungsrichtung vor der Reflektorschicht eine Dimmschicht zum Dimmen des Rückspiegels angeordnet.

In einer weiteren Ausgestaltung der Erfindung umfasst der Rückspiegel weiterhin eine zwischen der Quarter Waveplate und der reflektierenden Linear-Polarisationsschicht angeordnete absorbierende Linear-Polarisationsschicht. Eine absorbierende Linear-Polarisationsschicht im Sinne der Erfindung ist insbesondere eine Schicht, die für von der Displayschicht emittiertes im wesentlichen in einer Durchgangsrichtung polarisiertes Licht im wesentlichen transparent ist und die von der Displayschicht emittiertes im wesentlichen orthogonal zur Durchgangsrichtung polarisiertes Licht im wesentlichen absorbiert. Die Durchgangsrichtung der reflektierenden Linear-Polarisationsschicht und die Durchgangsrichtung der absorbierenden Linear-Polarisationsschicht sind in einer weiteren Ausgestaltung der Erfindung im Wesentlichen parallel.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen.
Fig. 1 zeigt ein Ausführungsbeispiel eines Kraftfahrzeuges;
Fig. 2 zeigt ein Ausführungsbeispiel eines datentechnisch mit einer Kamera verbundenen Rückspiegels;
Fig. 3 zeigt ein Ausführungsbeispiel einer Anzeige in einem Rückspiegel;
Fig. 4 zeigt ein weiteres Ausführungsbeispiel einer Anzeige in einem Rückspiegel;
Fig. 5 zeigt ein weiteres Ausführungsbeispiel einer Anzeige in einem Rückspiegel;
Fig. 6 zeigt ein weiteres Ausführungsbeispiel einer Anzeige in einem Rückspiegel;
Fig. 7 zeigt ein weiteres Ausführungsbeispiel einer Anzeige in einem Rückspiegel;
Fig. 8 zeigt ein weiteres Ausführungsbeispiel einer Anzeige in einem Rückspiegel;
Fig. 9 zeigt ein Ausführungsbeispiel eines Rückspiegels in einer Explosionsdarstellung;
Fig. 10 zeigt ein Ausführungsbeispiel einer Spiegelschicht;
Fig. 11 zeigt eine Reflektivität aufgetragen über eine Wellenlänge von Licht;
Fig. 12 zeigt ein weiteres Ausführungsbeispiel einer Spiegelschicht;
Fig. 13 zeigt ein weiteres Ausführungsbeispiel einer Spiegelschicht;
Fig. 14 zeigt ein weiteres Ausführungsbeispiel einer Spiegelschicht;
Fig. 15 zeigt eine Lichtdurchlässigkeit aufgetragen über eine Wellenlänge von Licht; und
Fig. 16 zeigt ein Ausführungsbeispiel eines Teils einer Spiegelschicht zur Implementierung einer Dimmfunktion.

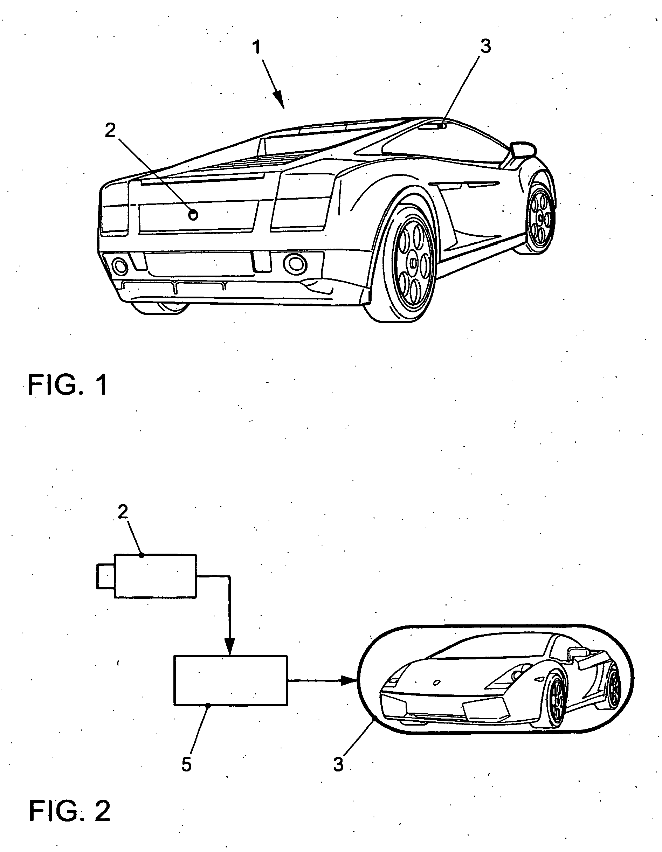

Fig. 1 zeigt ein Ausführungsbeispiel eines Kraftfahrzeuges 1. Das Kraftfahrzeug 1 umfasst eine datentechnisch mittels eines in Fig. 2 dargestellten Videoadapters 5 mit einem Rückspiegel 3 verbundene Kamera 2 zur Aufnahme eines Bildes von der Umgebung des Kraftfahrzeuges 1. Dabei ist die Kamera 2 im dargestellten Ausführungsbeispiel im Wesentlichen mittig am Heck des Kraftfahrzeuges 1 angeordnet, so dass ein Bereich hinter dem Kraftfahrzeug 1, und damit z.B. - wie in Fig. 2 abgebildet - ein anderes Kraftfahrzeug hinter dem Kraftfahrzeug 1, mittels der Kamera 2 aufgenommen und mittels des Rückspiegels 3, der eine mit Bezugnahme auf die folgenden Figuren erläuterte Displayfunktion umfasst, dargestellt werden kann.

Der Rückspiegel 3 erfüllt eine Doppelfunktion. Zum einen ist der Rückspiegel 3 als Rückspiegel im herkömmlichen Sinne und zum anderen als Display verwendbar, wobei wahlweise oder an bestimmte Betriebszustände des Kraftfahrzeuges 1 gekoppelt zwischen der Funktion als Rückspiegel im herkömmlichen Sinne und der Funktion als Display gewechselt werden kann. So kann z.B. vorgesehen sein, dass der Rückspiegel 3 dann ein von der Kamera 2 aufgenommenes Bild zeigt, wenn bei dem Kraftfahrzeug 1 ein Rückwärtsgang eingelegt ist, und dass der Rückspiegel 3 ein Rückspiegel im herkömmlichen Sinne ist, wenn bei dem Kraftfahrzeug 1 ein Vorwärtsgang eingelegt ist. Alternativ oder zusätzlich können auch Bedienmittel wie Schalter oder eine Spracheingabe zum wahlweisen Umschalten zwischen den beiden vorgenannten Zuständen des Rückspiegels 3 vorgesehen sein.

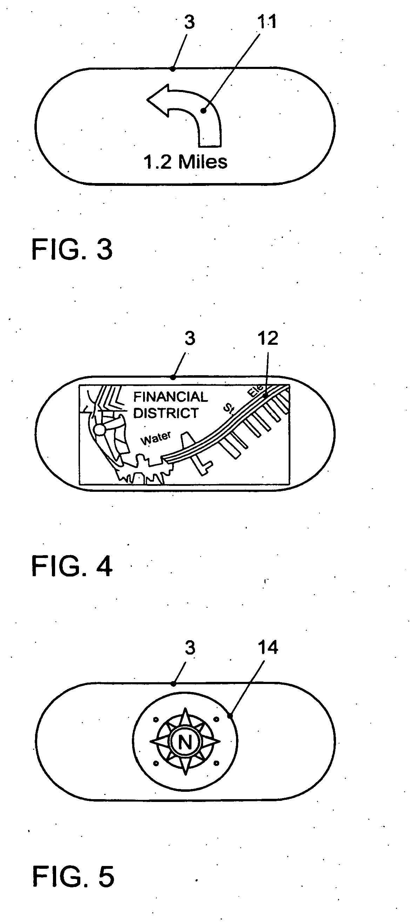

Alternativ oder zusätzlich zu der - in Fig. 2 gezeigten - Darstellung eines von der Kamera 2 aufgenommenen Bildes können auch - wie in Fig. 3, Fig. 4, Fig. 5, Fig. 6, Fig. 7 und Fig. 8 gezeigt - andere Bilder mittels des Rückspiegels 3 dargestellt werden. So zeigt Fig. 3 ein Ausführungsbeispiel für die Anzeige einer von einem Navigationssystem erzeugten Richtungsangabe 11 in dem Rückspiegel 3. Fig. 4 zeigt ein Ausführungsbeispiel für die Anzeige einer von einem Navigationssystem erzeugten Straßenkarte 12 in dem Rückspiegel 3, und Fig. 5 zeigt ein Ausführungsbeispiel für die Anzeige einer von einem Kompass erzeugten geographischen Richtungsangabe 14 in dem Rückspiegel 3.

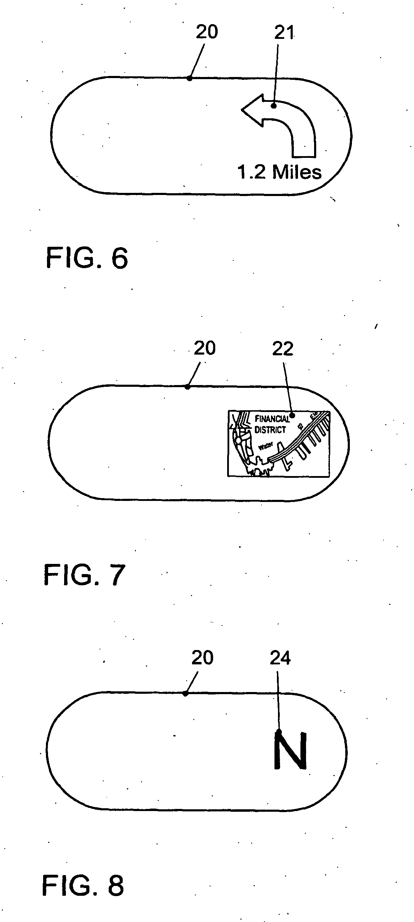

Mittels des Rückspiegels 3 kann sich eine Anzeige - wie in Fig. 2 und Fig. 4 erkennbar - über einen wesentlichen Teil des Rückspiegels 3 erstrecken. Es kann aber auch vorgesehen sein, dass sich nur ein Teil eines Rückspiegels alls Display nutzen lässt, während ein anderer Teil eines derartigen Rückspiegels auch in einem Anzeigezustand als Spiegel nutzbar ist. Einen derartigen Rückspiegel 20 zeigen Fig. 6, Fig. 7 und Fig. 8, wobei Fig. 6 ein Ausführungsbeispiel für die Anzeige einer von einem Navigationssystem erzeugten Richtungsangabe 21 in dem Rückspiegel 20, Fig. 7 ein Ausführungsbeispiel für die Anzeige einer von einem Navigationssystem erzeugten Straßenkarte 22 in dem Rückspiegel 20 und Fig. 8 ein Ausführungsbeispiel für die Anzeige einer von einem Kompass erzeugten geographischen Richtungsangabe 24 in dem Rückspiegel 20 zeigt. Bei dem Rückspiegel 20 ist nur das rechte Drittel des Rückspiegels 20 als Display nutzbar, während die linken zwei Drittel des Rückspiegels 20 auch in einem Anzeigezustand, als Spiegel nutzbar sind.

Alternativ oder zusätzlich können auch weitere das Kraftfahrzeug 1 betreffende Informationen, wie der Abstand zu einem Hindernis, die Geschwindigkeit des Kraftfahrzeuges 1 usw., oder die Uhrzeit mittels des Rückspiegels 3 bzw. des Rückspiegels 20 angezeigt werden.

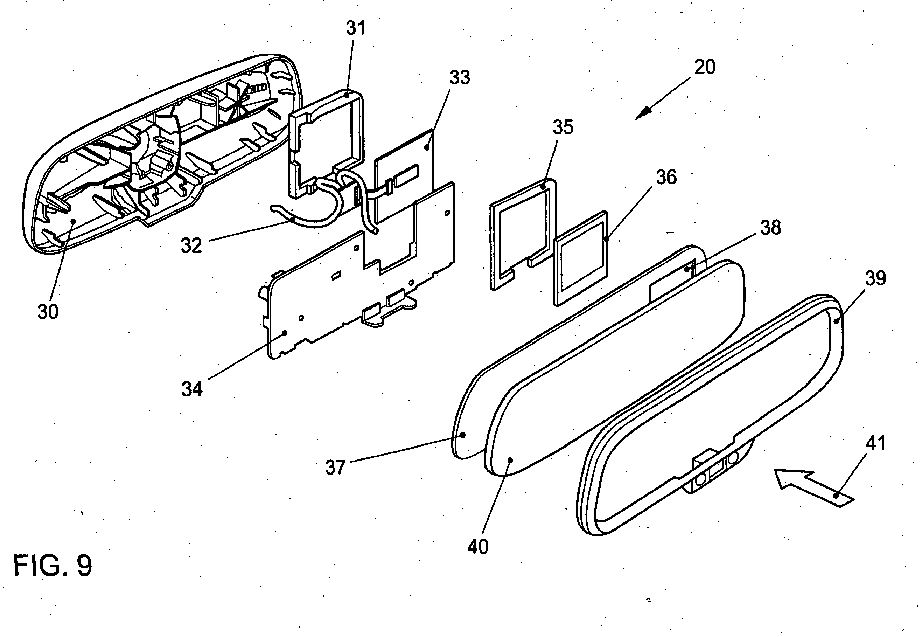

Fig. 9 zeigt den Rückspiegel 20 in einer Explosionsdarstellung. Dabei bezeichnet Bezugszeichen 30 ein Rückspiegelgehäuse. Bezugszeichen 31 bezeichnet ein Platinengehäuse zur Aufnahme einer Platine 33 mit einer Ansteuerung für eine als OLED ausgestaltete Displayschicht 36. Bezugszeichen 32 bezeichnet ein Kabel zum Anschluss der Platine 33, und Bezugszeichen 35 bezeichnet ein Gehäuse zur Aufnahme der Displayschicht 36. Die Displayschicht 36 ist in einer Aussparung 38 einer Maske 37 angeordnet, die wiederum in Bezug auf eine Betrachtungsrichtung 41 hinter einer Spiegelschicht 40 angeordnet ist. Bezugszeichen 39 bezeichnet einen mit dem Spiegelgehäuse 30 zusammenfügbaren Rahmen. Bezugszeichen 34 bezeichnet eine Platine zur Implementierung weiterer Funktionen des Rückspiegels 20, wie etwa zur Implementierung einer Dimmfunktion. Die Platinen 33 und 34 können auch durch eine einzige Platine ersetzt werden. Der Rückspiegel 3 ist in entsprechender Weise wie das in Fig. 9 dargestellte Ausführungsbeispiel des Rückspiegels 20 ausgestaltbar. Dabei sind jedoch eine entsprechend größere Aussparung und eine entsprechend größere Displayschicht vorzusehen. Es kann auch die Maske 37 weggelassen werden.

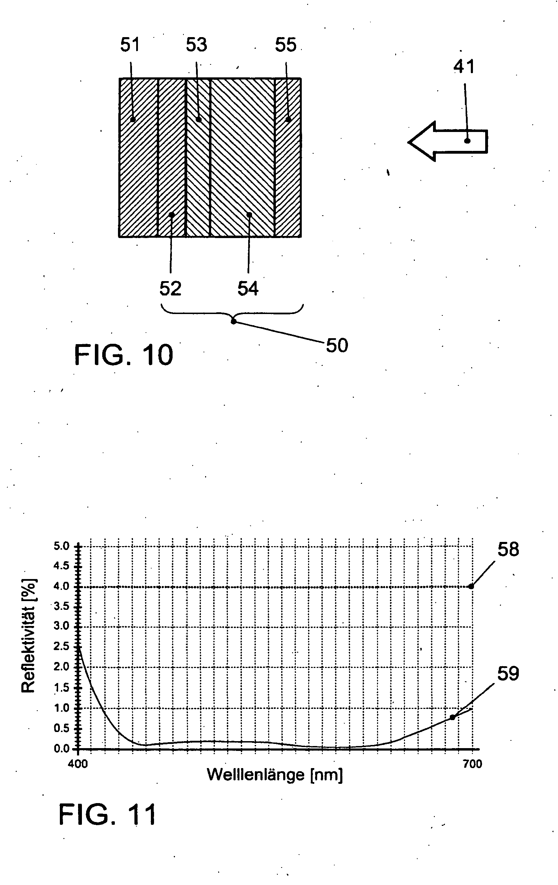

Fig. 10 zeigt einen Querschnitt eines Ausführungsbeispiels einer Spiegelschicht 50 zur Verwendung als Spiegelschicht 40 gemäß Fig. 9 mit einer auf einer der Betrachtungsrichtung 41 abgewandten Seite der Spiegelschicht 50 angeordneten, der Displayschicht 36 entsprechenden OLED-Schicht 51. Die Spiegelschicht 50 umfasst eine Glasschicht 54 und eine in Bezug auf die Betrachtungsrichtung 41 hinter der Glasschicht 54 angeordnete semitransparente Reflektorschicht 53. Die semitransparente Reflektorschicht 53 ist für von der OLED-Schicht 51 emittiertes Licht transparent, reflektiert jedoch von der Betrachtungsrichtung 41 aus auf den Rückspiegel 20 treffendes Licht. In einer bevorzugten Ausgestaltung umfasst die semitranspärente Reflektorschicht 53 eine oder mehrere Verbindungen aus der Gruppe der Verbindungen TiO₂, SiO₂ und HfO₂, insbesondere eine Mischung aus allen diesen Verbindungen. Eine derartige semitransparente Reflektorschicht 53 besitzt für entgegen der Betrachtungsrichtung 41 auf die semitransparente Reflektorschicht 53 treffendes Licht eine Transparenz von mehr als 99%, insbesondere eine Transparenz von mehr als 99,5%.

Zwischen der OLED-Schicht 51 und der semitransparenten Reflektorschicht 53 und in Bezug auf die Betrachtungsrichtung 41 vor der Glasschicht 54 ist je eine Anti-Reflektionsschicht 52 bzw. 55 angeordnet. Geeignete Anti-Reflektionsschichten werden von Integrated Optical Services Corp., 291 Sinclair Frontage Rd., Milpitas, CA 95035, USA und Southwall Technologies Corp., 3975 East Bayshore Rd., Palo Alto, CA 94303, USA angeboten. Einzelheiten zu Anti-Reflektionsschichten sind auch unter der Internetadresse www.cvilaser.com/static/tech_arcoatings.asp?PrintFriendly=TRUE offenbart. Fig. 11 zeigt die über die Wellenlänge von Licht aufgetragene Reflektivität 59 einer geeigneten Anti-Reflektionsschicht. Bezugszeichen 58 bezeichnet dabei die Reflektivität ohne eine Anti-Reflektionsschicht.

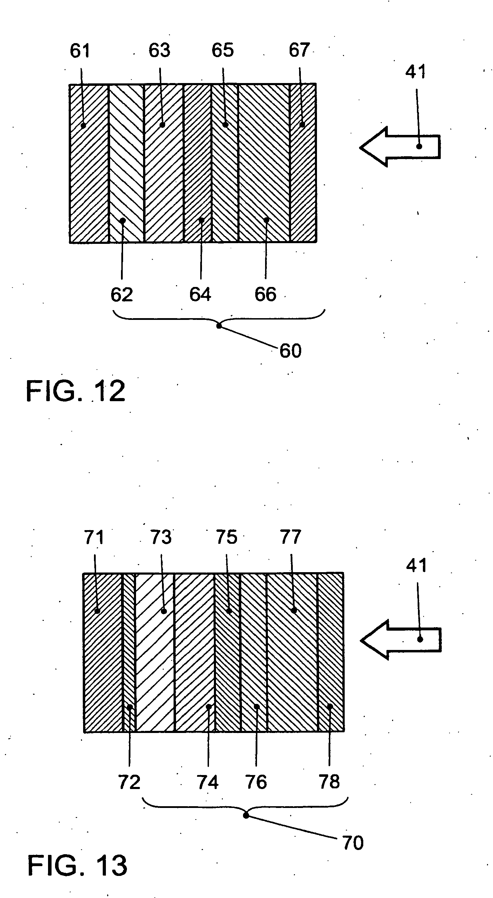

Fig. 12 zeigt einen Querschnitt eines gegenüber dem Ausführungsbeispiel gemäß Fig. 10 verbesserten Ausführungsbeispiels einer Spiegelschicht 60 zur Verwendung als Spiegelschicht 40 gemäß Fig. 9 mit einer auf einer der Betrachtungsrichtung 41 abgewandten Seite der Spiegelschicht 60 angeordneten, der Displayschicht 36 entsprechenden, insbesondere als OLED-Schicht ausgestaltete, Displayschicht 61. Die Spiegelschicht 60 umfasst eine Glasschicht 66 und eine in Bezug auf die Betrachtungsrichtung 41 hinter der Glasschicht 66 angeordnete der semitransparenten Reflektorschicht 53 entsprechende semitransparente Reflektorschicht 65. In Bezug auf die Betrachtungsrichtung 41 hinter der semitransparenten Reflektorschicht 65 und in Bezug auf die Betrachtungsrichtung 41 vor der Glasschicht 66 ist je eine der Anti-Reflektionsschicht 52 bzw. 55 entsprechende Anti-Reflektionsschicht 64 bzw. 67 angeordnet.

Die Spiegelschicht 60 umfasst zudem eine in Bezug auf die Betrachtungsrichtung 41 hinter der Anti-Reflektionsschicht 64 angeordnete Quarter Waveplate 63 und eine zwischen der Displayschicht 61 und der Quarter Waveplate 63 angeordnete absorbierende Linear-Polarisationsschicht 62. Die absorbierende Linear-Polarisationsschicht 62 ist für von der Displayschicht 61 emittiertes im Wesentlichen in einer Durchgangsrichtung der absorbierenden Linear-Polarisationsschicht 62 polarisiertes Licht im Wesentlichen transparent und absorbiert von der Displayschicht 61 emittiertes im Wesentlichen orthogonal zur Durchgangsrichtung der absorbierenden Linear-Polarisationsschicht 62 polarisiertes Licht.

Fig. 13 zeigt einen Querschnitt eines gegenüber dem Ausführungsbeispiel gemäß Fig. 12 weiter verbesserten Ausführungsbeispiels einer Spiegelschicht 70 zur Verwendung als Spiegelschicht 40 gemäß Fig. 9 mit einer auf einer der Betrachtungsrichtung 41 abgewandten Seite der Spiegelschicht 70 angeordneten, der Displayschicht 36 entsprechenden OLED-Schicht 71 mit einer reflektierenden Oberfläche 72. Einzelheiten zu geeigneten OLED-Schichten mit einer reflektierenden Oberfläche können der US 6 747 618 (incorporated by reference), der US 6 753 999 (incorporated by reference), der US 6 481 851 (incorporated by reference), der US 6 407 408 (incorporated by reference) und der US 2004/0069985 A1 (incorporated by reference) entnommen werden.

Die Spiegelschicht 70 umfasst eine Glasschicht 77 und eine in Bezug auf die Betrachtungsrichtung 41 hinter der Glasschicht 77 angeordnete der semitransparenten Reflektorschicht 53 entsprechende semitransparente Reflektorschicht 76. In Bezug auf die Betrachtungsrichtung 41 hinter der Semitransparenten Reflektorschicht 76 ist optional eine der Anti-Reflektionsschicht 52 bzw. 55 entsprechende Anti-Reflektionsschicht 75 angeordnet. In Bezug auf die Betrachtungsrichtung 41 vor der Glasschicht 77 ist eine der Anti-Reflektionsschicht 52 bzw. 55 entsprechende Anti-Reftektionsschicht 78 angeordnet.

Die Spiegelschicht 70 umfasst zudem eine in Bezug auf die Betrachtungsrichtung 41 hinter der Anti-Reflektionsschicht 75 bzw. hinter der semitransparenten Reflektorschicht 76 angeordnete Quarter Waveplate 74 und eine zwischen der Displayschicht 71 und der Quarter Waveplate 74 angeordnete reflektierende, insbesondere als eine so genannte DBEF-Filter-Schicht ausgebildete, Linear-Polarisationsschicht 73. Die reflektierende Linear-Polarisationsschicht 73 ist für von der Displayschicht 71 emittiertes im Wesentlichen in einer Durchgangsrichtung der reflektierenden Linear-Polarisationsschicht 73 polarisiertes Licht im Wesentlichen transparent und reflektiert von der Displayschicht 71 emittiertes im Wesentlichen orthogonal zur Durchgangsrichtung der reflektierenden Linear-Polarisationsschicht 73 polarisiertes Licht.

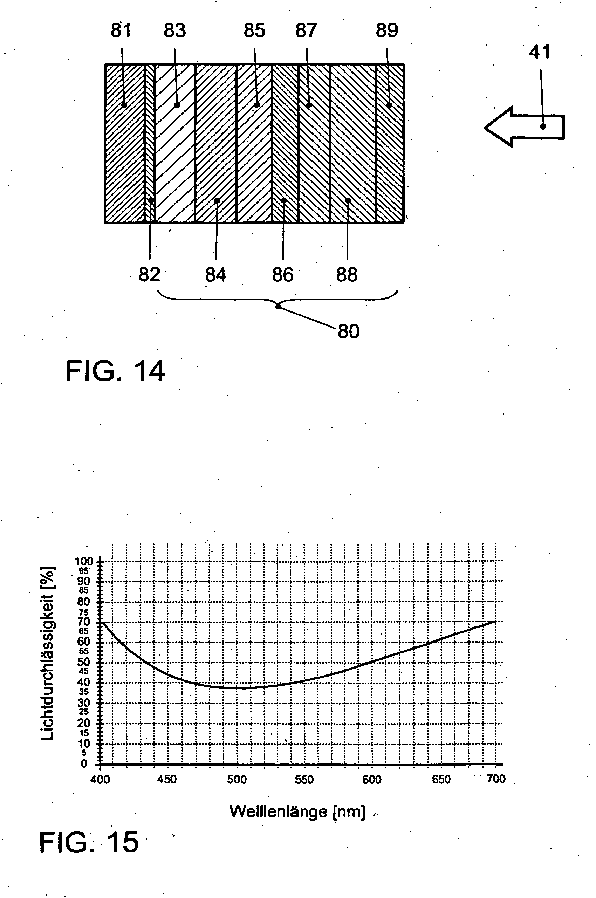

Fig. 14 zeigt einen Querschnitt eines besonders geeigneten Ausführungsbeispiels einer Spiegelschicht 80 zur Verwendung als Spiegelschicht 40 gemäß Fig. 9 mit einer auf einer der Betrachtungsrichtung 41 abgewandten Seite der Spiegelschicht 80 angeordneten, der Displayschicht 36 entsprechenden OLED-Schicht 81 mit einer reflektierenden Oberfläche 82. Die Spiegelschicht 80 umfasst eine Glasschicht 88 und eine in Bezug auf die Betrachtungsrichtung 41 hinter der Glasschicht 88 angeordnete der semitransparenten Reflektorschicht 53 entsprechende semitransparente Reflektorschicht 87. In Bezug auf die Betrachtungsrichtung 41 hinter der semitransparenten Reflektorschicht 87 ist optional eine der Anti-Reflektionsschicht 52 bzw. 55 entsprechende Ahti-Reflektionsschicht 86 angeordnet. In Bezug auf die Betrachtungsrichtung 41 vor der Glasschicht 88 ist eine der Anti-Reflektionsschicht 52 bzw. 55 entsprechende Anti-Reflektionsschicht 89 angeordnet.

Die Spiegelschicht 80 umfasst eine in Bezug auf die Betrachtungsrichtung 41 hinter der Anti-Reflektionsschicht 86 bzw. hinter der semitransparenten Reflektorschicht 87 angeordnete Quarter Waveplate 85 und eine zwischen der Displayschicht 81 und der Quarter Waveplate 85 angeordnete absorbierende Linear-Polarisationsschicht 84. Zwischen der absorbierenden Linear-Polarisationsschicht 84 ist eine reflektierende, insbesondere als DBEF-Filter-Schicht ausgebildete, Linear-Polarisationsschicht 83 angeordnet. Die reflektierende Linear-Polarisationsschicht 83 ist für von der Displayschicht 81 emittiertes im Wesentlichen in einer Durchgangsrichtung der reflektierenden Linear-Polarisationsschicht 83 polarisiertes Licht im Wesentlichen transparent und reflektiert von der Displayschicht 81 emittiertes im Wesentlichen orthogonal zur Durchgangsrichtung der reflektierenden Linear-Polarisationsschicht 83 polarisiertes Licht. Die absorbierende Linear-Polarisationsschicht 84 ist für von der Displayschicht 81 emittiertes im Wesentlichen in einer Durchgangsrichtung der absorbierenden Linear-Polarisationsschicht 84 polarisiertes Licht im Wesentlichen transparent und absorbiert von der Displayschicht 81 emittiertes im Wesentlichen orthogonal zur Durchgangsrichtung der absorbierenden Linear-Potarisationsschicht 84 polarisiertes Licht. Die Durchgangsrichtung der absorbierenden Linear-Polarisationsschicht 84 ist im Wesentlichen parallel zu der Durchgangsrichtung der reflektierenden Linear-Polarisationsschicht 83.

Die Anordnung aus Quarter Waveplate 85, absorbierender Linear-Polarisationsschicht 84 und reflektierender Linear-Polarisationsschicht 83 kann durch ein so genanntes DRD-Filter ersetzt werden.

Ein entsprechend der Anordnung gemäß Fig. 14 ausgestalteter Rückspiegel 3 bzw. 20 erlaubt die Darstellung besonders kontrastreicher und scharfer sowie gleichzeitig heller Bilder. So ist bei Licht emittierender Displayschicht 81 für entgegen der Betrachtungsrichtung 41 aus dem Rückspiegel 3 bzw. 20 austretendes Licht eine Helligkeit von mehr als 350 cd/m², insbesondere von mehr als 400 cd/m², erreichbar. D.h. es tritt in einem Bereich des Rückspiegels 3 bzw. 20, in dem die Displayschicht 81 ihre volle Lichtleistung bereitstellt, Licht mit einer Helligkeit von mehr als 350 cd/m², insbesondere von mehr als 400 cd/m², aus. Bei einigen OLEDs sind sogar Helligkeiten von mehr als 500 cd/m² erreichbar. Fig. 15 zeigt - aufgetragen über die Wellenlänge - den Anteil des mittels der Displayschicht 81 entgegen der Betrachtungsrichtung 41 emittierbaren Lichts, der entgegen der Betrachtungsrichtung 41 aus dem entsprechend Fig. 14 implementierten Rückspiegel 3 bzw. 20 austritt. Dabei zeigt Fig. 15, dass für jede relevante Wellenlänge im sichtbaren Bereich zumindest 45% des mittels der Displayschicht 81 entgegen der Betrachturigsrichtung 41 emittierten Lichts entgegen der Betrachtungsrichtung 41 aus dem entsprechend Fig. 14 implementierten Rückspiegel 3 bzw. 20 austritt.

Es ist insbesondere vorgesehen, dass die Quarter Waveplates 63, 74, 85, die absorbierenden Linear-Polarisationsschichten 62, 84 und die reflektierenden Linear-Polarisationsschichten 73, 83 insbesondere passive Schichten sind.

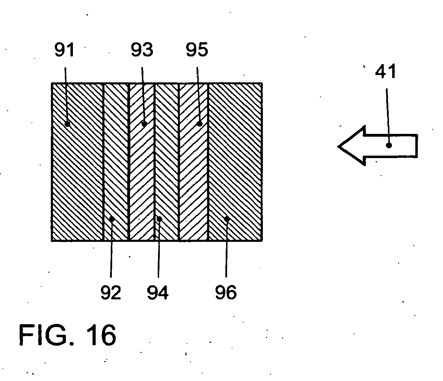

Fig. 16 zeigt ein Ausführungsbeispiel eines Teils einer Spiegelschicht zur Implementierung einer Dimmfunktion, wobei dieser Teil die Anordnung aus semitransparenter Reflektorschicht 53 und Glasschicht 54 in Fig. 10, die Anordnung aus semitransparenter Reflektorschicht 65 und Glasschicht 66 in Fig. 12, die Anordnung aus semitransparenter Reflektorschicht 76 und Glasschicht 77 in Fig. 13 und die Anordnung aus semitransparenter Reflektorschicht 87 und Glasschicht 88 in Fig. 10 zur Implementierung einer Dimmfunktion ersetzt. Der in Fig. 16 dargestellte Teil einer Spiegelschicht umfasst eine Glasschicht 91 und eine Glasschicht 96, wobei zwischen der Glasschicht 91 und der Glasschicht 96 in Bezug auf die Betrachtungsrichtung 41 vor der Glasschicht 91 eine semitransparente Reftektorschicht 92 angeordnet ist. Zwischen der Glasschicht 96 und der semitransparenten Reflektorschicht 92 ist eine Dimmschicht angeordnete, die eine zwischen zwei ITO-Elektroden 93 und 95 angeordnete elektrochromatische Schicht 94 umfasst.

Optional ist zwischen der semitransparenten Reflektorschicht 92 und der ITO-Elektrode 93 und/oder zwischen der ITO-Elektrode 95 und der Gtasschicht 96 eine der Anti-Reflektionsschicht 52 bzw. 55 entsprechende Anti-Reflektionsschicht angeordnet.

Die Elemente und Schichten in den Figuren sind unter Berücksichtigung von Einfachheit und Klarheit und nicht notwendigerweise maßstabsgetreu gezeichnet. So sind z.B. die Größenordnungen einiger Elemente bzw. Schichten deutlich übertrieben gegenüber anderen Elementen bzw. Schichten dargestellt, um das Verständnis der Ausführungsbeispiele der vorliegenden Erfindung zu verbessern.

### Bezugszeichenliste

- 1: Kraftfahrzeug
- 2: Kamera
- 3, 20: Rückspiegel
- 5: Videoadapters
- 11, 21: Richtungsangabe
- 12, 22: Straßenkarte
- 14,24: geographische Richtungsangabe
- 30: Rückspiegelgehäuse
- 31: Platinengehäuse
- 32: Kabel
- 33, 34: Platine
- 35: Gehäuse
- 36, 61: Displayschicht
- 37: Maske
- 38: Aussparung
- 39: Rahmen
- 40, 50, 60, 70, 80: Spiegelschicht
- 41: Betrachtungsrichtung
- 51, 71, 81: OLED-Schicht
- 52, 55, 64, 67, 75, 78, 86, 89: Anti-Reflektionsschicht
- 53, 65, 76, 87, 92: semitransparente Reflektorschicht
- 54, 66, 77, 88, 91, 96: Glasschicht
- 58, 59: Reflektivität
- 62, 84: absorbierende Linear-Polarisationsschicht
- 63, 74, 85: Quarter Waveplate
- 72, 82: reflektierende Oberfläche
- 73, 83: reflektierende Linear-Polarisationsschicht
- 93, 95: ITO-Elektrode
- 94: elektrochromatische Schicht

## Patentansprüche

1. Rückspiegel für ein Kraftfahrzeug, der Rückspiegel umfassend:
eine Reflektorschicht zum Reflektieren von Licht, das von einer Betrachtungsrichtung aus auf den Rückspiegel trifft;
eine in Bezug auf die Betrachtungsrichtung hinter der Reflektorschicht angeordnete Displayschicht zum Emittieren von Licht; und
eine zwischen der Displayschicht und der Reflektorschicht angeordnete Quarter Waveplate; **gekennzeichnet durch**
eine zwischen der Displayschicht und der Quarter Waveplate angeordnete reflektierende Linear-Polarisationsschicht.

2. Rückspiegel nach Anspruch 1, der Rückspiegel weiterhin umfassend:
eine in Bezug auf die Betrachtungsrichtung vor der Quarter Waveplate angeordnete Anti-Reflektionsschicht.

3. Rückspiegel nach einem der vorherigen Ansprüche, wobei die Anti-Reflektionsschicht mit der Quarter Waveplate verbunden ist.

4. Rückspiegel nach einem der vorherigen Ansprüche, wobei die Quarter Waveplate eine passive Schicht ist.

5. Rückspiegel nach einem der vorherigen Ansprüche, wobei die reflektierende Linear-Polarisationsschicht eine passive Schicht ist.

6. Rückspiegel nach einem der vorherigen Ansprüche, die Displayschicht umfassend: eine OLED-Schicht.

7. Rückspiegel nach einem der vorherigen Ansprüche, wobei die Reflektorschicht für entgegen der Betrachtungsrichtung auf die Reflektorschicht treffendes Licht eine Transparenz von mehr als 99% besitzt.

8. Rückspiegel nach einem der vorherigen Ansprüche, wobei die Reflektorschicht für entgegen der Betrachtungsrichtung auf die Reflektorschicht treffendes Licht eine Transparenz von mehr als 99,5% besitzt.

9. Rückspiegel nach einem der vorherigen Ansprüche, wobei die Reflektorschicht eine oder mehrere Verbindungen aus der Gruppe der Verbindungen TiO₂, SiO₂ und HfO₂ umfasst.

10. Rückspiegel nach einem der vorherigen Ansprüche, wobei die Reflektorschicht TiO₂, SiO₂ und HfO₂ umfasst.

11. Rückspiegel nach einem der vorherigen Ansprüche, wobei zumindest 40% des mittels der Displayschicht entgegen der Betrachtungsrichtung emittierbaren Lichts entgegen der Betrachtungsrichtung aus dem Rückspiegel austreten.

12. Rückspiegel nach einem der vorherigen Ansprüche, wobei zumindest 45% des mittels der Displayschicht entgegen der Betrachtungsrichtung emittierbaren Lichts entgegen der Betrachtungsrichtung aus dem Rückspiegel austreten.

13. Rückspiegel nach einem der vorherigen Ansprüche, wobei bei Licht emittierender Displayschicht für entgegen der Betrachtungsrichtung aus dem Rückspiegel austretendes Licht eine Helligkeit von mehr als 350 cd/m² erreichbar ist.

14. Rückspiegel nach einem der vorherigen Ansprüche, wobei bei Licht emittierender Displayschicht für entgegen der Betrachtungsrichtung aus dem Rückspiegel austretendes Licht eine Helligkeit von mehr als 400 cd/m² erreichbar ist.

15. Rückspiegel nach einem der vorherigen Ansprüche, wobei bei Licht emittierender Displayschicht für entgegen der Betrachtungsrichtung aus dem Rückspiegel austretendes Licht eine Helligkeit von mehr als 500 cd/m² erreichbar ist.

16. Rückspiegel nach einem der vorherigen Ansprüche, der Rückspiegel weiterhin umfassend:
eine zwischen der Quarter Waveplate und der reflektierenden Linear-Polarisationsschicht angeordnete absorbierende Linear-Polarisationsschicht.

## Claims

1. Rear-view mirror for a motor vehicle, the rear-view mirror comprising:
a reflector layer for reflecting light which impinges on the rear-view mirror from a viewing direction;
a display layer, arranged behind the reflector layer with reference to the viewing direction, for emitting light; and
a quarter wave plate arranged between the display layer and the reflector layer;, **characterized by**
a reflecting linear-polarization layer arranged between the display layer and the quarter wave plate.

2. Rear-view mirror according to Claim 1, the rear-view mirror further comprising:
an anti-reflection layer arranged in front of the quarter wave plate with reference to the viewing direction.

3. Rear-view mirror according to one of the preceding claims, in which the anti-reflection layer is connected to the quarter wave plate.

4. Rear-view mirror according to one of the preceding claims, in which the quarter wave plate is a passive layer.

5. Rear-view mirror according to one of the preceding claims, in which the reflecting linear-polarization layer is a passive layer.

6. Rear-view mirror according to one of the preceding claims, the display layer comprising: an OLED layer.

7. Rear-view mirror according to one of the preceding claims, in which the reflector layer has a transparency of more than 99% for light impinging on the reflector layer against the viewing direction.

8. Rear-view mirror according to one of the preceding claims, in which the reflector layer has a transparency of more than 99.5% for light impinging on the reflector layer against the viewing direction.

9. Rear-view mirror according to one of the preceding claims, in which the reflector layer comprises one or more compounds from the group of the compounds TiO₂, SiO₂ and HfO₂.

10. Rear-view mirror according to one of the preceding claims, in which the reflector layer comprises TiO₂, SiO₂ and HfO₂.

11. Rear-view mirror according to one of the preceding clams, in which at least 40% of the light which can be emitted against the viewing direction by means of the display layer emerges from the rear-view mirror against the viewing direction.

12. Rear-view mirror according to one of the preceding claims, in which at least 45% of the light which can be emitted against the viewing direction by means of the display layer emerges from the rear-view mirror against the viewing direction.

13. Rear-view mirror according to one of the preceding claims, in which in the case of a light-emitting display layer a brightness of more than 350 cd/m² can be achieved for light emerging from the rear-view mirror against the viewing direction.

14. Rear-view mirror according to one of the preceding claims, in which in the case of a light-emitting display layer a brightness of more than 400 cd/m² can be achieved for light emerging from the rear-view mirror against the viewing direction.

15. Rear-view mirror according to one of the preceding claims, in which in the case of a light-emitting display layer a brightness of more than 500 cd/m² can be achieved for light emerging from the rear-view mirror against the viewing direction.

16. Rear-view mirror according to one of the preceding claims, the rear-view mirror further comprising:
an absorbing linear-polarization layer arranged between the quarter wave plate and the reflecting linear-polarization layer.

## Revendications

1. Rétroviseur pour un véhicule automobile, le rétroviseur comprenant :
une couche réfléchissante pour refléter la lumière qui vient frapper le rétroviseur depuis une direction d'observation ;
une couche d'affichage, disposée derrière la couche réfléchissante par rapport à la direction d'observation, pour émettre de la lumière ; et
une lame quart d'onde disposée entre la couche d'affichage et la couche réfléchissante ; **caractérisé par**
une couche de polarisation linéaire réfléchissante disposée entre la couche d'affichage et la lame quart d'onde.

2. Rétroviseur selon la revendication 1, le rétroviseur comprenant en plus :
une couche anti-réflexion disposée devant la lame quart d'onde par rapport à la direction d'observation.

3. Rétroviseur selon l'une des revendications précédentes, la couche anti-réflexion étant attachée à la lame quart d'onde.

4. Rétroviseur selon l'une des revendications précédentes, la lame quart d'onde étant une couche passive.

5. Rétroviseur selon l'une des revendications précédentes, la couche de polarisation linéaire étant une couche passive.

6. Rétroviseur selon l'une des revendications précédentes, la couche d'affichage comprenant une couche d'OLED.

7. Rétroviseur selon l'une des revendications précédentes, la couche réfléchissante possédant une transparence de plus de 99 % pour la lumière qui vient frapper la couche réfléchissante en sens inverse de la direction d'observation.

8. Rétroviseur selon l'une des revendications précédentes, la couche réfléchissante possédant une transparence de plus de 99,5 % pour la lumière qui vient frapper la couche réfléchissante en sens inverse de la direction d'observation.

9. Rétroviseur selon l'une des revendications précédentes, la couche réfléchissante comprenant un ou plusieurs composés du groupe des composés TiO₂, SiO₂ et HfO₂.

10. Rétroviseur selon l'une des revendications précédentes, la couche réfléchissante comprenant du TiO₂, du SiO₂ et du HfO₂.

11. Rétroviseur selon l'une des revendications précédentes, au moins 40 % de la lumière pouvant être émise en sens inverse de la direction d'observation par la couche d'affichage sortant du rétroviseur en sens inverse de la direction d'observation.

12. Rétroviseur selon l'une des revendications précédentes, au moins 45 % de la lumière pouvant être émise en sens inverse de la direction d'observation par la couche d'affichage sortant du rétroviseur en sens inverse de la direction d'observation.

13. Rétroviseur selon l'une des revendications précédentes, une luminosité de plus de 350 cd/m² pouvant être atteinte par la lumière sortant du rétroviseur en sens inverse de la direction d'observation lorsque la couche d'affichage émet de la lumière.

14. Rétroviseur selon l'une des revendications précédentes, une luminosité de plus de 400 cd/m² pouvant être atteinte par la lumière sortant du rétroviseur en sens inverse de la direction d'observation lorsque la couche d'affichage émet de la lumière.

15. Rétroviseur selon l'une des revendications précédentes, une luminosité de plus de 500 cd/m² pouvant être atteinte par la lumière sortant du rétroviseur en sens inverse de la direction d'observation lorsque la couche d'affichage émet de la lumière.

16. Rétroviseur selon l'une des revendications précédentes, le rétroviseur comprenant en plus :
une couche de polarisation linéaire absorbante disposée entre la lame quart d'onde et la couche de polarisation linéaire réfléchissante.
